Europäisches Patentamt

European Patent Office

Office européen des brevets

(11) Publication number: **0 431 760 A2**

# (12) EUROPEAN PATENT APPLICATION

(21) Application number: 90312290.1

(22) Date of filing: 09.11.90

(51) Int. Cl.⁵: **F25B 29/00,** F24D 11/02, F24F 5/00

(30) Priority: 24.11.89 JP 305988/89

(43) Date of publication of application:
12.06.91 Bulletin 91/24

(84) Designated Contracting States:
DE FR GB IT

(71) Applicant: **UNION KOGYO KABUSHIKI KAISHA**
3-19, 4-chome, Nunoichi-cho
**Higashi-Osaka-shi, Osaka-fu(JP)**

(72) Inventor: **Matsuura, Takaaki**
18-12, 3-chome, Yamate-dai
**Ibaraki-shi, Osaka-fu(JP)**

(74) Representative: **Senior, Alan Murray et al**
**J.A. KEMP & CO., 14 South Square Gray's Inn**
**London WC1R 5LX(GB)**

(54) A method for air conditioning and supplying hot/cold water.

(57) A method for conditioning air, and supplying hot or cold water including the steps of circulating a refrigerant from a compressor through a condenser, expansion valve and evaporator, and then back to a compressor. The method further includes the steps of generating heat or providing a heating effect by the refrigerant in the condenser; heating a first fluid by the generated heat or heating effect in the condenser; absorbing heat or providing a cooling effect by the refrigerant in the evaporator; cooling a second fluid by the absorbed heat or cooling effect in the evaporator; circulating the first fluid heated by the heating step; circulating the second fluid cooled by the cooling step; conducting heat or providing a heating effect from the first fluid into at least one of the air and said water; and absorbing heat or providing a cooling effect from the second fluid into at least one of the air and said water. With the method of this invention, the energies for generating heat and for absorbing heat or the heating effect or cooling effect provided by the refrigerant through the condenser and evaporator, respectively, are efficiently utilized, and are thus not wasted

FIG.1

# A METHOD FOR AIR CONDITIONING AND SUPPLYING HOT/COLD WATER

This invention generally relates to a method for air-conditioning or for supplying hot and cold water.

Heat pumps are used for air conditioning. The conventional heat pumps are designed to conduct the heat while a refrigerant is circulated from a compressor through a condenser, expansion valve and evaporator, and then back to the compressor. In the conventional heat pumps, since the refrigerant generates or irradiates heat or creates a heating effect in the condenser, and absorbs heat or creates a cooling effect in the evaporator, when air is to be heated, the heat generated in the condenser is used, and when the air is to be cooled, the cooling effect created in the evaporator is used. Thus, the refrigerant in the conventional heat pumps is required to change flow passages depending on whether the air is to be heated or cooled. For this reason, the conventional heat pumps have been provided with a four-way valve and a reservoir for the refrigerant.

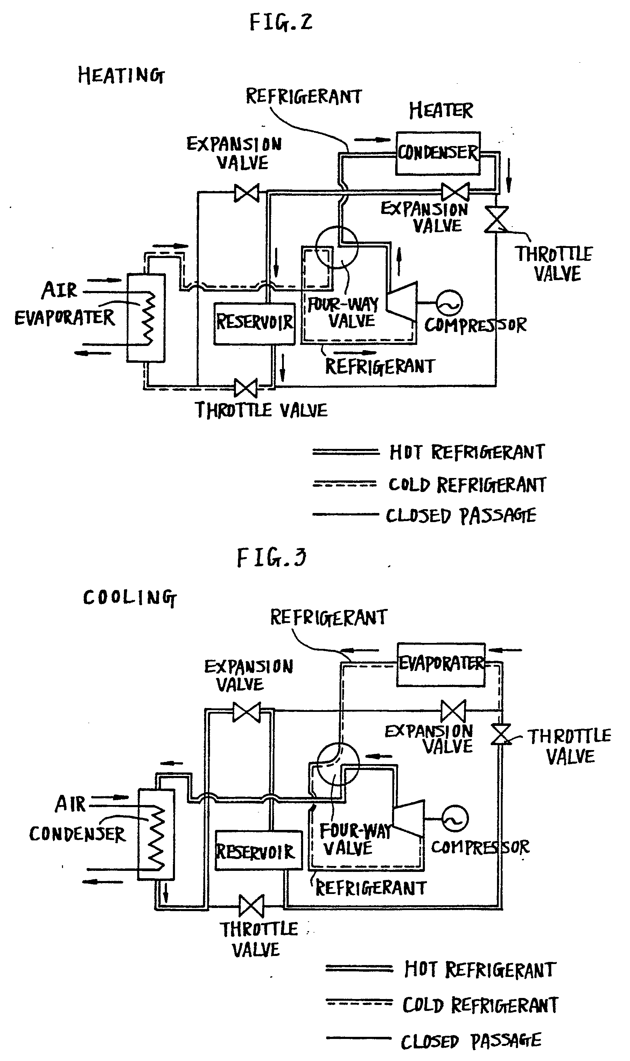

A heating method using conventional heat pumps is explained hereinbelow with reference to Fig. 2.

Fig. 2 shows flow passages of the refrigerant when the air is to be heated. In Fig. 2, the refrigerant, which has been compressed by the compressor and has a high temperature, is passed through a four-way valve, transferred to a condenser installed in a room, then passed through an expansion valve so as to lower the pressure of the refrigerant. Then, the refrigerant is passed through a reservoir, directed into an evaporator, then returned to the compressor, and is consequently circulated as stated above. While the refrigerant is being circulated, the heat generated by the refrigerant in the condenser can be used for heating the air, and the resulting hot air is used for heating the room. In this case, the evaporator is usually installed outside of the room and the cold generated in the evaporator is absorbed by the open air, and the resulting cold air is discarded.

On the other hand, the cooling of the air with the use of conventional heat pumps is carried out by flowing the refrigerant in the manner hereinafter described.

Fig. 3 shows flow passages of the refrigerant in the conventional cooling method. In Fig. 3, the refrigerant, which is compressed by the compressor and has a high pressure, is passed through a four-way valve, transferred to a condenser installed outside the room, passed through an expansion valve to have a low pressure, passed through a reservoir, and into an evaporator installed in the room, then returned back to the compressor, and consequently, circulated as discussed above. Since the refrigerant, while being circulated, absorbs the heat so as to generate the cold in the evaporator, the cold is then used for cooling the air, and the resulting cold air is supplied for cooling the room. In this case, the heat generated in the condenser installed outside the room is absorbed by the open air and the resultant hot air is discarded.

As discussed above, in the conventional method for conditioning the air, heat is discarded when the room is to be heated, and the cold is discarded when the room is to be cooled. This conventional method is quite uneconomical when viewed in terms of the effective use of the heat energy. When a room is to be cooled, the purpose in cooling the room can indeed be attained if only the cooling effect is used. However, when a user's environment is considered in its entirety, generated heat is always used for bathing, while the heat is discarded when the cooling of the room is required; thus, making the conventional device uneconomical.

Accordingly, it is an object of this invention to make effective use of the energy for conditioning the air without discarding the cooling effect when a room is to be heated, and without discarding the heat when a room is to be cooled.

The aforementioned and other objects of this invention are accomplished by simultaneously using the energy for irradiating heat or heating effect, and energy for absorbing heat or cooling effect by circulating a hot medium and a cold medium separate from the circulation of the refrigerant so that the heating effect and cooling effect need not be discarded as in the conventional air conditioning method. The aforementioned and other objects of this invention can further be accomplished by heating the air or water and cooling the air or water by heat-exchange from the hot medium and cold medium, respectively, and supplying the resultant air or water to the room. In other words, if air and water are heated and cooled through the hot medium and the cold medium by the refrigerant and the resultant air and water are supplied, then various advantages can be obtained such as that effective use can be made of both the heating effect or cooling effect, whereby the imbalance can be readily adjusted when a substantial amount of either the heating effect or cooling effect is required.

Furthermore, in order to ensure that the supply of the heated or cooled air or water is effectively supplied in the above-described method, liquids can be employed for both the hot medium and the cold medium. Moreover, in order to supply the heated or cooled air or water in a stable and steady state, a hot tank for the hot liquid and a cold tank for the cold liquid are required so as to be able to store some amount of each liquid in the respective tanks.

According to one embodiment of the present invention, there is provided a method for air conditioning or supplying hot and cold water, wherein a refrigerant is circulated from a compressor back to the compressor through a condenser, expansion valve and evaporator. Fluid is heated by the heat generated by the refrigerant in the condenser, and another fluid is cooled by the cold generated by the refrigerant in the evaporator. In the just described method, liquid is used as the medium, whereby a portion of the liquid is heated in the condenser and circulated as a hot liquid; another portion of the liquid is cooled in the evaporator and circulated as a cold liquid, and both the hot liquid and the cold liquid, while being circulated, conduct the heat and the cold to the air or water to form hot and cold air or water, respectively. According to another embodiment of the present invention, there is provided a method for conditioning the air or supplying hot and cold water, wherein a refrigerant is circulated from a compressor back to the compressor through a condenser, expansion valve and evaporator. A portion of the liquid is heated by the heat generated by the refrigerant in the condenser, and another portion of the liquid is cooled by the cold generated by the refrigerant in the evaporator. The just-described method makes use of liquid as the medium, whereby a portion of the liquid is heated in the condenser and circulated as a hot liquid, a substantial portion of which is stored in a hot tank. Another portion of the liquid is cooled in the evaporator and circulated as a cold liquid, a substantial portion of which is stored in a cold tank, and wherein both the hot liquid and the cold liquid, while being circulated, conduct the heat and cold to the air or water to form hot and cold air or water, respectively.

These and other features of the invention will be understood upon reading of the following description along with the drawings.

BRIEF DESCRIPTION OF THE DRAWINGS

Fig. 1 shows a schematic view of an embodiment of this invention for conditioning the air and supplying hot and cold water; and

Figs. 2 and 3 are schematic views of apparatuses embodying the conventional methods for conditioning the air.

DESCRIPTION OF THE PREFERRED EMBODIMENTS

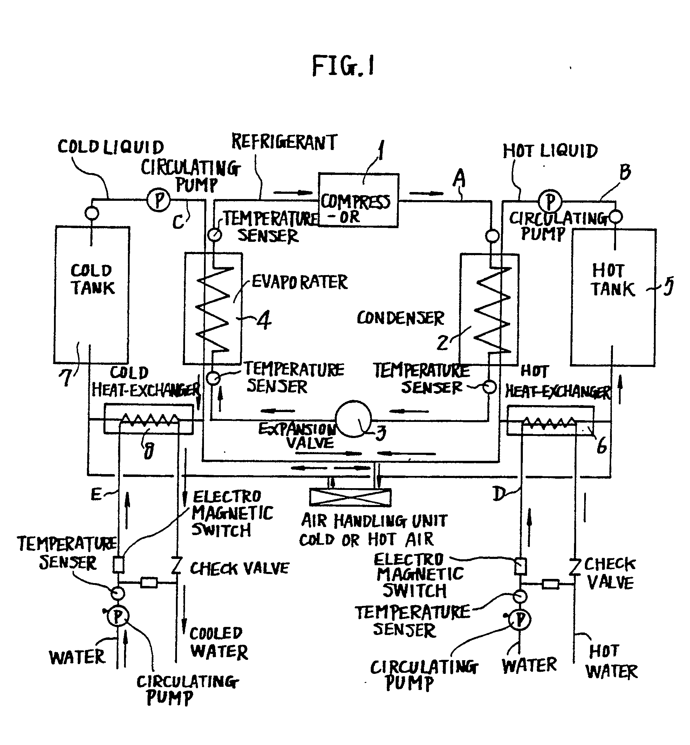

In Fig. 1, a refrigerant is compressed by a compressor 1 to advance through a passage A. While being advanced, the refrigerant is passed through a condenser 2, an expansion valve 3, an evaporator 4, in this order, and then returned back to the compressor 1; and thus, the refrigerant is circulated. The compressor 1, condenser 2, expansion valve 3, evaporator 4 and passage A connecting them are the same as those used in the conventional heat pumps. However, the passage A shown in Fig.1 is different from the conventional corresponding passages in that the passages according to this invention is provided with neither a four-way valve for converting flow of the refrigerant nor a reservoir for storing the refrigerant, and the refrigerant always flows in the same direction.

The method according to this invention, as shown in Fig.1, is further different from the conventional methods in that the condenser 2 is provided with a passage B; the evaporator 4 is provided with a passage C; hot liquid is circulated in the passage B; and cold liquid is circulated in the passage C. Furthermore, the method illustrated in Fig.1 is different from the conventional methods in that the passage B is provided with a hot tank 5 and a heat-exchanger 6 for heating the air or water; and the passage C is also provided with a cold tank 7 and a heat-exchanger 8 for cooling the air or water. Moreover, the method as shown in Fig.1 is different from the conventional methods in that the heat-exchangers 6 and 8 are provided with passages D and E, respectively, both for passing the air or water. The air or water flowing out from the exit portion of the passages D and E is supplied for heating or cooling a room of for use as hot or cold water.

The hot liquid running through the passage B is heated by the heat generated by the refrigerant in thecondenser 2, and is at a high temperature. The hot liquid having the high temperature is moved by a pump P, enters a hot tank 5, then is passed through the heat-exchanger 6, returned to the condenser 2, and is thus circulated in the passage B. The hot tank 5 stores therein a large amount of the hot liquid, and serves to lessen a rapid and substantial temperature change of the hot liquid.

The heat-exchanger 6 is provided with the passage D for passing the air or water, wherein heat-exchange is carried out between the hot liquid and the air or water. As a result, the air or water, while being run through the passage D, is heated to form hot air or hot water. Thus, the hot air or hot water can be obtained at the exit portion of the passage D. The hot air is supplied for heating a room, and the hot water is supplied for using the hot water or for heating other articles.

On the other hand, the cold liquid in the passage C is run by a circulating pump P, and is directed into evaporator 4, wherein the cold liquid is cooled by heat-exchange with the refrigerant and is at a low temperature. The cold liquid having the low temperature enters the heat-exchanger 8, then passes through a cold tank 7, and is returned to the evaporator 4, and thus, circulated in the passage C. The cold tank 7 acts as a reservoir for storing the cold liquid, and serves to reduce a rapid and substantial temperature change of the cold liquid.

The heat-exchanger 8 is provided with the passage E for passing the air or water, wherein heat-exchange is carried out between the cold liquid and the air or water. As a result, the air or water, while being passed through the passage E, is cooled to form cold air or water. Thus, the cold air or water can be obtained at the exit portion of the passage E. The cold air is supplied for cooling a room, and the cold water is supplied for consumption or for cooling articles.

In this invention, one type of refrigerant may be used, but a mixture of two kinds of refrigerants having different boiling points may also be used. When a mixture of refrigerants is used, a temperature difference between the hot liquid and cold liquid can be increased.

The same liquid may be used for the hot liquid and for the cold liquid, but different liquids may be used. The water and aqueous solutions are preferred among the liquids. The aqueous solutions may, for example, be brine.

Example No. 1

An example is stated hereinbelow with reference to Fig. 1, wherein use is made of "FREON R22" (CHCℓF$_2$, monochlorodifluoromethane) as the refrigerant for use during summer, and it is intended to provide the cold water at about 6°C at the rate of 120,000Kcal/hr, and provide the hot water at about 58°C at the rate of 180,000Kcal/hr.

A compressor of 22.5KW/hr is used for the compressor 1 from which "FREON R22" is passed through having a pressure of 25Kg/cm$^2$ and a temperature of 62°C towards the condenser 2, wherein "FREON R22" generates the heat of 180,000Kcal/hr, and is further directed towards the expansion valve 3. After leaving the expansion valve 3, the "FREON R22" enters the evaporator 4, wherein "FREON R22" is evaporated to absorb the heat of 120,000Kcal/hr from the outside and thus, an amount of cold of 120,000Kcal/hr is generated. As a result, "FREON R22" having a pressure of 4.5Kg/cm$^2$, and a temperature of -3°C is returned to the compressor 1. Thus, "FREON R22" is circulated in the passage A having the pressures and temperatures, as discussed above. The passage A is formed with a pipe having a diameter of 7.5cm.

Water is used for the hot liquid and circulated in the passage B. The passage B is formed with a pipe having diameter of 7.5cm. Hot liquid is heated by heat-exchange with "FREON R22" in the condenser 2. When entered into the condenser 2, "FREON R22" has a pressure of 25kg/cm$^2$ and a temperature of 62°C, and the hot liquid may be heated up to a temperature slightly lower than 62°C, for example, up to 58°C. Thus, the hot liquid might be set to a temperature between 58°C and 55°C.

The compressor 1 is operated in such a manner that it commences working and causes "FREON R22" to run into the condenser 2 in order to elevate the temperature of the hot liquid when the temperature of the hot liquid is lowered below 55°C, and the compressor 1 stops working and does not cause "FREON R22" to run into the condenser 2 when the temperature of the hot liquid reaches an elevation of above 58°C.

On the other hand, water is used for the cold liquid and is circulated in the passage C. The passage C is formed with a pipe having a diameter of 7.5cm. The cold liquid running in the passage C is cooled in the evaporator 4 by heat-exchange with "FREON R22". Since "FREON R22" has a pressure of 4.5kg/cm$^2$ and a temperature of -3°C when exiting from the evaporator 4, the cold liquid is cooled until it reaches a temperature of a little higher than -3°C (e.g., 2°C). Thus, the cold liquid can be set to have a temperature of between 5°C and 8°C.

The compressor 1 is operated in such a manner that it commences working and causes "FREON R22" to run into the evaporator 4 in order to cool the cold liquid when the temperature of the cold liquid is elevated above 8°C, and the compressor 1 stops working and does not flow "FREON R22" into the evaporator 4 when the temperature of the cold liquid is lowered below 5°C.

"FREON R22" generates heat of 180,000Kcal/hr in the condenser 2. Thus, the condenser 2 is made so as to have a heat-conduction surface sufficient to conduct this amount of heat. The hot liquid heated in the condenser 2 is circulated in the passage B by a circulating pump P of 1.5KW. The hot tank 5 has a capacity of about 18 tons and stores about 15 tons of hot liquid. The passage B is provided with a heat-exchanger 6 for the hot liquid. The heat-exchanger 6 has a heat-conduction surface sufficient for 180,000Kcal/hr, and conducts heat from the hot liquid flowing in the passage B to the air or water flowing in the passage D. The air is directed into the passage D by a circulating pump P of 2.2KW/hr, and supplied as hot water having a temperature between 55°C and 58°C.

"FREON R22" absorbs heat or has a cooling effect in the amount of 120,000Kcal/hr. The evaporator 4 is made so as to have a heat-conduction surface sufficient to heat this amount of cooling effect. The cold liquid cooled in the evaporator 4 is circulated in the passage C by a circulating pump P of 0.75KW. The cold tank 7 has a capacity of about 3 tons, and stores about 3 tons of cold liquid. The passage C is provided with a heat-exchanger 8 for cooling the air or water. The heat-exchanger has a heat-conduction surface sufficient for 120,000Kcal/hr, and conducts the cooling effect from the cold liquid flowing in the passage C to the air or water flowing in the passage E; thus, the air or water is cooled. The water flowing in the passage E is circulated by a circulating pump P of 0.75KW/hr, and circulated as a cold water having a temperature between $7°$C and $10°$C. Along the way of this circulation is an air handling unit, wherein the air is cooled by the cold water to form cold air of about $18°$C which is supplied for cooling a room.

According to the present invention, since liquid is used for conducting heat and cold, and the liquid is circulated separately as the hot liquid and the cold liquid, it is not necessary to provide a four-way valve and reservoir for the refrigerant because no change in the flow for the refrigerant is required which is different from that of the conventional method wherein the heating and cooling effects are directly conducted into the air. Moreover, since liquid is used, hot liquid and cold liquid are separately formed, and a great deal of the heat and the cold can be stored in the liquid, and also, frequent starting and stopping of the compressor 1 can be avoided; consequently, heating and cooling can be efficiently carried out, and a substantial amount of the heating and cooling effects can be taken out. Moreover, while the hot liquid and the cold liquid are separately circulated, the heating and cooling effects contained in the liquids are conducted to the air or water so as to form hot and cold air or hot and cold water, respectively, for use; hence, the air and water are indirectly heated and cooled through the hot liquid and cold liquid, respectively. Therefore, the air or water having less temperature change can be supplied in a stable state. Furthermore, since the hot liquid and cold liquid are separately circulated, a substantial amount of the heat and the cold can be conducted, and the coefficient of performance is substantially increased. Thus, according to this invention, effective use of the heat and the cold can be achieved.

Additionally, since the hot liquid is stored in the hot tank, even in the case where the heat generated by the refrigerant in the condenser is abruptly decreased, and in the case where a great deal of the heat is abruptly required by the air or water in the heat-exchanger for the hot liquid, the hot liquid exhibits less of a temperature change, and accordingly, the hot air or water can be supplied in a more stable state. Likewise, since the cold liquid is stored in the cold tank, even in the case where the cold generated by the refrigerant in the evaporator is abruptly decreased, and in the case where a substantial amount of cooling effect is abruptly required by the air or water in the heat-exchanger for the cold liquid, the cold liquid exhibits less of a temperature change, and accordingly, the cold air or water can be supplied in a more stable state.

While the invention has been particularly shown and described in reference to preferred embodiments thereof, it will be understood by those skilled in the art that changes in form and details may be made there in without departing from the spirit and scope of the invention.

## Claims

1. A method of providing air-conditioning and supply of hot or cold water characterised by the steps of:
circulating a refrigerant from a compressor (1) through a condenser (2), expansion valve (3) and evaporator (4), and then back to a compressor (1); and selectively heating the air and/or water using heat from the condenser (2) and selectively cooling the air and/or water by heat exchange with the evaporator (4).

2. A method according to claim 1 further comprising heating a first liquid by heat generated in said condenser (2);
cooling a second liquid by heat absorbed in said evaporator (4);
circulating the heated first liquid through a heating circuit (B) to provide said selective heating of at least one of the air and water;
circulating the cooled second liquid through a cooling circuit (C) to provide said selective cooling of at least one of the air and water.

3. A method according to claim 2 further comprising the steps of:
storing at least a substantial portion of the heated first liquid in a hot tank (5) and storing at least a substantial portion of the cooled second liquid in a cold tank (7).

4. Apparatus for providing air-conditioning and a supply of hot water comprising:
a refrigerant circuit (A) comprising a compressor (1), a condenser (2), expansion valve (3) and evaporator (4); a first heat exchange means (6) for exchanging heat between water and the condenser (2) to heat the water; and
a second heat exchange means (8) for exchanging heat between the air and the evaporator (4) to cool the air.

5. Apparatus according to claim 4 wherein said first heat exchange means (6) comprises a first liquid circulated around a heating circuit (C) to come into thermal contact with the condenser (2) and the second heat exchange means (8) comprises a second liquid circulated around a cooling circuit (C) to come into thermal contact with said evaporator (4).

6. Apparatus according to claim 5 further comprising a hot tank (5) for storing heated first liquid and a cold tank (7) for storing cooled second liquid.

7. Apparatus according to claim 5 or 6 comprising means (8) passing water into thermal contact with the second liquid to provide a supply of cooled water.

# FIG.1

## FIG.2

HEATING

REFRIGERANT

HEATER

EXPANSION VALVE

CONDENSER

EXPANSION VALVE

THROTTLE VALVE

AIR EVAPORATER

RESERVOIR

FOUR-WAY VALVE

COMPRESSOR

REFRIGERANT

THROTTLE VALVE

======  HOT REFRIGERANT

=====  COLD REFRIGERANT

———  CLOSED PASSAGE

## FIG.3

COOLING

REFRIGERANT

EXPANSION VALVE

EVAPORATER

EXPANSION VALVE

THROTTLE VALVE

AIR CONDENSER

RESERVOIR

FOUR-WAY VALVE

COMPRESSOR

REFRIGERANT

THROTTLE VALVE

======  HOT REFRIGERANT

=====  COLD REFRIGERANT

———  CLOSED PASSAGE